# EUROPÄISCHE PATENTSCHRIFT

(11) **EP 0 419 958 B1**
(45) Veröffentlichungstag und Bekanntmachung des Hinweises auf die Patenterteilung: **19.02.1997**
(21) Anmeldenummer: 90117668.5
(22) Anmeldetag: 13.09.1990
(51) Int. Cl.: H04L 12/56, H04L 12/14

(54) **Schaltungsanordnung zum Ermitteln der einer ATM-Vermittlungsanlage im Zuge von virtuellen Verbindungen jeweils zugeführten Nachrichtensignalmenge und zur Überprüfung der Einhaltung festgelegter Bitraten**
Circuit arrangement for detecting the data quantity transmitted in an ATM-switching system and for checking compliance with specified bit rates
Circuit dans un central de commutation à multiplexage temporel asynchrone pour détecter la quantité de données transmises et pour contrôler la conformité avec des taux de bits specifiés

(30) Priorität: 29.09.1989 DE 3932607; 27.04.1990 DE 4013628
(43) Veröffentlichungstag der Anmeldung: 03.04.1991
(73) Patentinhaber: SIEMENS AKTIENGESELLSCHAFT, 80333 München (DE)
(72) Erfinder: Danner, Gerd, Dipl.-Phys., D-8000 München 21 (DE)

(56) Entgegenhaltungen:
- EP-A- 0 192 966
- EP-A- 0 236 818
- EP-A- 0 293 315
- EP-A- 0 310 173

## Beschreibung

Die Erfindung betrifft eine Schaltungsanordnung zum Ermitteln der einer ATM-Vermittlungsanlage über Zubringerleitungen jeweils zugeführten Nachrichtensignalmenge bei der Übertragung von Nachrichtenzellen nach einem asynchronen Übertragungsverfahren im Zuge von über die Zubringerleitungen verlaufenden virtuellen Verbindungen und zur Überprüfung der Einhaltung festgelegter Übertragungsbitraten für die einzelnen virtuellen Verbindungen.

Zur Vermeidung von Überlast bei der Übertragung von Zellen in Breitband-Vermittlungssystemen ist bereits vorgeschlagen worden (International Zurich Seminar on Digital Communications", März 1986, ,,New Directions in Communications", A 3.1 bis A 3.8, J.B. Turner), in einem Vermittlungsknoten jeder damit verbundenen Teilnehmereinrichtung einen Vorwärts-Rückwärtszähler zuzuordnen, welcher die von der jeweiligen Teilnehmereinrichtung gesendeten Zellen zählt und den momentanen Zählerstand entsprechend der von der jeweiligen Teilnehmereinrichtung festgelegten Übertragungsgeschwindigkeit zu bestimmten Zeitpunkten erniedrigt. Überschreitet dabei der momentane Zählerstand einen von der jeweiligen Teilnehmereinrichtung vorgebbaren Wert, so erkennt der Vermittlungsknoten eine Überlast (,,Leaky Bucket"-Verfahren).

Darüber hinaus ist eine weitere Schaltungsanordnung zur Vermeidung von Überlast in einem Breitband-Vermittlungssystem bekannt (DE-OS 37 32 937). Bei dieser Schaltungsanordnung sind in einem Vermittlungsknoten jeder damit verbundenen Teilnehmereinrichtung anstelle eines Vorwärts-Rückwärts-zählers zwei Vorwärts-Zähler zugeordnet, wobei ein erster Zähler die von der jeweiligen Teilnehmereinrichtung gesendeten Zellen zählt und der verbleibende Zähler die während der bestehenden Verbindung aufgelaufene Verbindungszeit bestimmt. Die beiden Zähler sind mit einer Einrichtung verbunden, die aus dem Verhältnis der Zählerstände das Einhalten der von der jeweiligen Teilnehmereinrichtung bestimmten maximalen Bitrate überprüft. Darüber hinaus ist auch anhand dieser Zählerstände eine Gebührenerfassung vorgesehen.

Schließlich sind aus EP-A-0 293 315 ein Verfahren und eine Einrichtung zum Erkennen einer Überlast in einer ATM-Kommunikationseinrichtung bei der Übertragung von Nachrichtensignalen über ATM-Multiplexkanäle und zur Flußsteuerung bei Vorliegen einer solchen Überlast bekannt. Die Einrichtung verfügt dabei u.a. über verbindungsindividuelle vor-/Rückwärts-Zähleranordnungen. Diese Zähleranordnungen werden von einer zentralen Steuereinrichtung her so gesteuert, daß mit jedem Auftreten einer Nachrichtenzelle der Zählerstand der der jeweiligen Verbindung zugeordneten Vor-/Rückwärts-Zähleranordnung erhöht wird. Darüber hinaus wird wiederum unter der Steuerung der zentralen Steuereinrichtung der momentane Zählerstand einer solchen Vor-/Rückwärts-Zähleranordnung nach Maßgabe von Zählsignalen, deren Häufigkeit individuell für die einzelnen virtuellen Verbindungen durch die zentrale Steuereinrichtung festgelegt wird, erniedrigt. Aus den durch diese Vor-/Rückwärts-zählweise resultierenden Zählerständen werden dann die für die jeweilige virtuelle Verbindung erforderlichen Flußsteuermaßnahmen abgeleitet. Dabei geht aus EP-A-0 293 315 auch hervor, daß die Vor-/Rückwärts-Zähleranordnungen durch Speicher für die Speicherung von Zählerständen und durch für die einzelnen virtuellen Verbindungen gemeinsam benutzte Einrichtungen zur Veränderung der zwischengespeicherten Zählerstände realisiert werden können.

Es ist nun Aufgabe der vorliegenden Erfindung, einen Weg zu zeigen, wie eine Schaltungsanordnung ausgebildet werden kann, um mit einem relativ geringen schaltungstechnischen Aufwand für sämtliche, über eine Zubringerleitung verlaufenden virtuellen Verbindungen individuell die übertragene Nachrichtensignalmenge zu ermitteln und eine verbindungsindividuelle Überwachung der Übertragungsbitrate durchführen zu können.

Gelöst wird die vorstehend aufgezeigte Aufgabe durch die im Patentanspruch 1 angegebenen Merkmale.

Die Erfindung bringt den Vorteil mit sich, daß durch die verbindungsindividuellen Zähleinrichtungen für über beliebige, mit einer ATM-Vermittlungsanlage verbundene Zubringerleitungen verlaufende virtuelle Verbindungen jeweils in einfacher Weise die übertragene Nachrichtensignalmenge zum Zwecke einer Gebührenerfassung individuell ermittelt und zugleich die Einhaltung der für die jeweilige virtuelle Verbindung festgelegten Übertragungsbitrate überprüft werden kann. So ist beispielsweise eine solche verbindungsindividuelle Ermittlung und Bitratenüberwachung für Zubringerleitungen möglich, die im Multiplexbetrieb von einer Vielzahl von Teilnehmereinrichtungen gemeinsam benutzt sind. Ebenso ist eine solche verbindungsindividuelle Ermittlung und Bitratenüberwachung auch für den Fall durchführbar, daß Teilnehmereinrichtungen gleichzeitig in mehrere virtuelle Verbindungen einbezogen sind.

Für eine verbindungsindividuelle Ermittlung übertragener Nachrichtensignalmengen ist es bei der vorliegenden Erfindung für den Fall, daß Nachrichtensignale im Zuge virtueller Verbindungen in Form von Nachrichtenzellen fester Länge übertragen werden, ausreichend, bei Auftreten einer Nachrichtenzelle den momentanen ersten Zählerstand der in Frage kommenden Zähleinrichtung lediglich einmal um eine Zähleinheit zu verändern. Erfolgt dagegen eine Übertragung von Nachrichtensignalen im Zuge von virtuellen Verbindungen in Nachrichtenzellen variabler Länge, so ist es gemäß Patentanspruch 2 zweckmäßig, daß auf eine Ansteuerung einer der Zähleinrichtungen hin deren momentaner erster Zählerstand nach jeweils einer festgelegten Anzahl von der gerade auftretenden Nachrichtenzelle zugehörigen Nachrichtenbits um eine Zähleinheit verändert wird. Diese Anzahl kann dabei entsprechend der für die Gebührenerfassung geforderten Genauigkeit festgelegt werden.

Eine weitere vorteilhafte Ausgestaltung der vorliegenden Erfindung ergibt sich aus dem Patentanspruch 3. Der Vorteil dieser Ausgestaltung besteht darin, daß aufgrund der Abgabe eines Meldesignals mit jedem Erreichen eines festgelegten maximalen Zählerstandes die Speicherkapazität der den einzelnen Zähleinrichtungen zugeordneten Speicherbereiche sowie die Kapazität der Addiereinrichtung relativ gering ausgelegt werden können. Die Anzahl der im Zuge einer virtuellen Verbindung dabei auftretenden Meldesignale kann an zentraler Stelle verbindungsindividuell aufsummiert werden.

Für eine verbindungsindividuelle Überprüfung festgelegter Übertragungsbitraten ist es bei der vorliegenden Erfindung für den Fall, daß Nachrichtensignale im Zuge virtueller Verbindungen in Form von Nachrichtenzellen fester Länge übertragen werden, ausreichend, mit jeder Ansteuerung einer der Zähleinrichtungen den momentanen zweiten Zählerstand lediglich einmal um einen der festgelegten Übertragungsbitrate entsprechenden Bitratenwert zu verändern. Erfolgt dagegen eine Übertragung von Nachrichtensignalen im Zuge von virtuellen Verbindungen in Nachrichtenzellen variabler Länge, so ist es gemäß Patentanspruch 4 zweckmäßig, daß im Zuge eines bei Auftreten einer Nachrichtenzelle hin aktivierten Steuerzyklus ein momentaner zweiter Zählerstand nach jeweils einer festgelegten Anzahl von der gerade auftretenden Nachrichtenzelle zugehörige Bits um den für die jeweilige virtuelle Verbindung festgelegten Bitratenwert verändert wird. Diese Anzahl kann dabei entsprechend der für die Überprüfung von Übertragungsbitraten geforderten Genauigkeit festgelegt werden.

Weitere vorteilhafte Ausgestaltungen der vorliegenden Erfindung ergeben sich aus den Patentansprüchen 5 bis 7. Der Vorteil dieser Ausgestaltungen besteht einerseits in der einfachen Steuerung der den Zubringerleitungen zugeordneten Zahleinrichtungen und andererseits in dem besonders geringen schaltungstechnischen Aufwand für die Realisierung dieser Zähleinrichtungen.

Im folgenden wird nun die Erfindung anhand von Zeichnungen beispielsweise näher erläutert.
- FIG 1: zeigt ein Blockschaltbild einer ATM-Vermittlungsanlage, bei der die Erfindung angewandt ist,
- FIG 2: zeigt ein erstes Ausführungsbeispiel der in FIG 1 lediglich schematisch dargestellten Behandlungseinrichtungen, FIG 3 zeigt ein zweites Ausführungsbeispiel der in FIG 1 lediglich schematisch dargestellten Behandlungseinrichtungen und FIG 4 zeigt ein Ausführungsbeispiel der in FIG 3 schematisch dargestellten Steuereinrichtung.

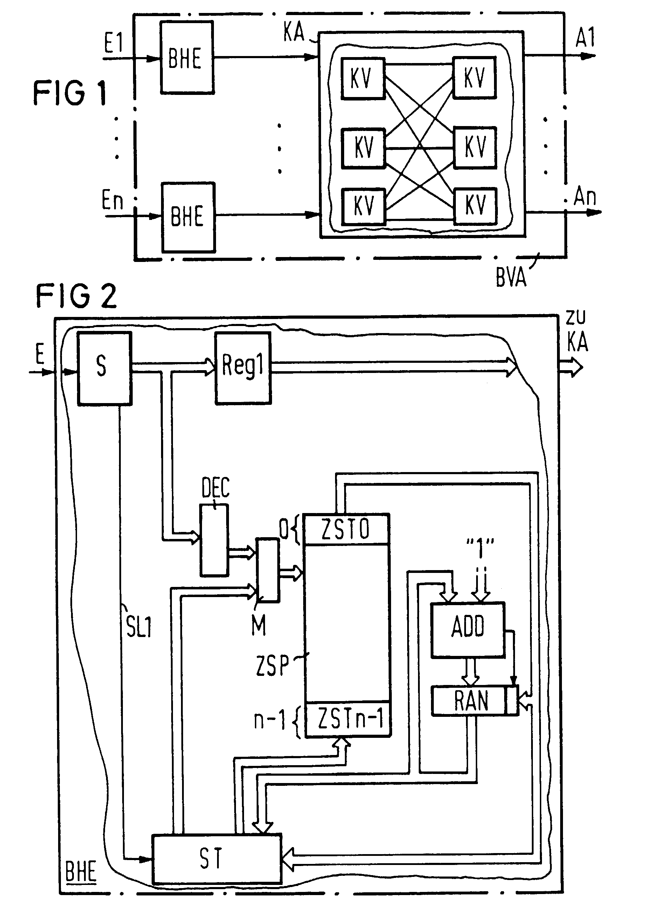

In FIG 1 ist eine ATM-Vermittlungsanlage BVA schematisch dargestellt, an welche eine Mehrzahl von Zubringerleitungen E1 bis En sowie eine Mehrzahl von Abnehmerleitungen A1 bis An angeschlossen sind. Von diesen sind in FIG 1 lediglich die Zubringerleitungen E1 und En und die Abnehmerleitungen A1 bis An angegeben. Auf den Zubringerleitungen und Abnehmerleitungen erfolgt jeweils eine Übertragung von Nachrichtenzellen im Zuge von virtuellen Verbindungen nach einem asynchronen Übertragungsverfahren ("Asynchronous Transfer Mode"). Bei den Nachrichtenzellen möge es sich um Zellen fester Länge handeln, welche jeweils über einen Zellenkopf mit einer die jeweilige virtuelle Verbindung bezeichnenden virtuellen Kanalnummer sowie einen Informationsteil verfügen. In dem Informationsteil erfolgt die Übertragung der eigentlichen Nachrichtensignale. Unter Nachrichtensignalen sollen dabei Daten- und Textsignale sowie Sprach- bzw. Bildsignale in digitaler Form verstanden werden. Im übrigen sei hier bereits darauf hingewiesen, daß die vorliegende Erfindung auch dann anwendbar ist, wenn Nachrichtensignale im Zuge von virtuellen Verbindungen in Zellen variabler Länge übertragen werden.

Wie aus FIG 1 hervorgeht, ist jeder der Zubringerleitungen E1 bis En eine Behandlungseinrichtung BHE zugeordnet. Eine solche Behandlungseinrichtung, auf deren Aufbau im folgenden noch näher eingegangen wird, nimmt die im Zuge von virtuellen Verbindungen über die zugeordnete Zubringerleitung übertragenen Nachrichtenzellen auf und ermittelt bei deren Weiterleitung an eine Koppelanordnung KA der ATM-Vermittlungsanlage verbindungsindividuell die im Zuge der, jeweiligen virtuellen Verbindung übertragene Nachrichtensignalmenge. Für die Koppelanordnung KA ist im übrigen in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benufzt sein. Da der Aufbau und die Wirkungsweise derartiger Koppelanordnungen bekannt ist, wird im folgenden darauf nicht näher eingegangen.

In FIG 2 ist ein erstes Ausführungsbeispiel der zuvor erwähnten, in gleicher Weise aufgebauten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Zubringerleitung, die in FIG 2 mit E bezeichnet ist, ist eine Schnittstelleneinrichtung S verbunden, welche einerseits den Beginn von in serieller Form übertragenen Nachrichtenzellen erkennt und andererseits in Nachrichtenzellen jeweils auftretende Bits zu Bitgruppen mit jeweils einer festgelegten Bitanzahl von beispielsweise 8 Bits zusammenfaßt und die einzelnen Bitgruppen (Oktetts) in paralleler Form über ein Leitungssystem bereitstellt. Dieser Schnittstelleneinrichtung sind ein Register Reg1 als Verzögerungseinrichtung sowie ein Decodierer DEC nachgeschaltet. Dieses Register Reg1 wird von sämtlichen an die bereits erwähnte Koppelanordnung KA weiterzuleitenden Nachrichtenzellen durchlaufen. Die Verzögerungszeit ist dabei so festgelegt, daß durch die nachfolgend beschriebene Schaltungsanordnung vor einer Weiterleitung einer gerade aufgenommenen Nachrichtenzelle eine Registrierung vorgenommen werden kann.

Der Zellenkopf einer in das Register Reg1 aufgenommenen Nachrichtenzelle wird zusätzlich dem gerade erwähnten Decodierer DEC zugeführt, der durch Decodieren der in diesem Zellenkopf enthaltenen virtuellen Kanalnummer Adressensignale bereitstellt, die einem als Schreib-Lese-Speicher ausgebildeten Zählerstandspeicher ZSP über erste Eingänge eines Multiplexers M zugeführt sind.

Der Zählerstandspeicher ZSP weist für jede der auf der zugehörigen Zubringerleitung E möglichen virtuellen Verbindungen einen gesonderten Speicherbereich auf. Die einzelnen Speicherbereiche sind dabei nach Maßgabe der in Nachrichtenzellen enthaltenen, von dem zuvor erwähnten Decodierer DEC decodierten virtuellen Kanalnummern individuell ansteuerbar. Können beispielsweise über die betreffende Zubringerleitung n mit "0" bis "n-1" bezeichnete virtuelle Verbindungen verlaufen, so sind diesen also, wie in FIG 2 angedeutet ist, mit "0" bis "n-1" bezeichnete Speicherbereiche zugeordnet, die jeweils Teil einer der jeweiligen virtuellen Verbindung individuell zugeordneten Zähleinrichtung sind. Die einzelnen Speicherbereiche dienen dabei für die Speicherung eines noch zu erläuternden momentanen Zählerstandes der jeweiligen Zähleinrichtung. Diese Speicherung erfolgt unter der Steuerung einer in FIG 2 mit ST bezeichneten Steuereinrichtung, die über Leitungssysteme einerseits mit Dateneingängen und Datenausgängen des Zählerstandspeichers ZSP und andererseits mit zweiten Eingängen des bereits erwähnten Multiplexers M sowie über eine Steuerleitung SL1 mit der Schnittstelleneinrichtung S verbunden ist. Die für die virtuellen Verbindungen gespeicherten momentanen Zählerstände sind im übrigen entsprechend ihrer Zugehörigkeit zu den einzelnen virtuellen Verbindungen in FIG 2 mit ZST0 bis ZSTn-1 bezeichnet.

Sämtlichen einer Zubringerleitung zugeordneten Zähleinrichtungen ist neben einem individuellen Speicherbereich des Zählerstandspeichers ZSP eine gemeinsame, den einzelnen Zähleinrichtungen im Multiplexbetrieb zur Verfügung stehende Addiereinrichtung zugehörig. Diese Addiereinrichtung weist ein mit RAN bezeichnetes Register sowie einen Addierer ADD auf. Ladeeingänge dieses Registers stehen über ein Leitungssystem mit Datenausgängen des Zählerstandspeichers ZSP in Verbindung. Ausgangsseitig ist das Register RAN an erste Eingänge des Addierers ADD angeschlossen. Dieser Addierer, dessen zweite Eingänge mit einem Binärwert "1" beaufschlagt sind, weist mit Dateneingängen des Registers RAN verbundene Summensignalausgänge sowie einen mit einem gesonderten Registerplatz dieses Registers verbundenen Überlaufausgang auf. Das Register RAN steht ausgangsseitig im übrigen auch noch mit der bereits erwähnten Steuereinrichtung ST in Verbindung.

Nachdem zuvor der Aufbau der in FIG 2 dargestellten Behandlungseinrichtung BHE erläutert worden ist, wird nunmehr auf die Wirkungsweise einer solchen Behandlungseinrichtung näher eingegangen.

Wie bereits erwähnt, sind in den den einzelnen virtuellen Verbindungen zugeordneten Speicherbereichen des Zählerstandspeichers ZSP individuell momentane Zählerstände gespeichert. Von der Steuereinrichtung ST her wird dabei im Zuge des Aufbaus der jeweiligen virtuellen Verbindung als momentaner Zählerstand ein festgelegter Anfangszählerstand eingetragen, der beispielsweise mit "0" festgelegt sein möge.

Tritt nun auf der in FIG 2 mit E bezeichneten Zubringerleitung eine Nachrichtenzelle auf, so wird diese von der Schnittstelleneinrichtung S her nach einer oktettweisen Umsetzung dem Register Reg1 zugeführt. Das Auftreten der Nachrichtenzelle wird dabei auch der Steuereinrichtung ST durch ein über die oben erwähnte Steuerleitung SL1 übertragenes Meldesignal angezeigt. Außerdem übernimmt der Decodierer DEC von der Schnittstelleneinrichtung S her den in der gerade auftretenden Nachrichtenzelle enthaltenen Zellenkopf.

Auf das Auftreten des Meldesignals hin steuert die Steuereinrichtung ST einen Lesezyklus in dem Zählerstandspeicher ZSP nach Maßgabe der von dem Decodierer DEC über den Multiplexer M bereitgestellten Adressensignale. Dadurch stellt dieser Zählerstandspeicher an seinen Datenausgängen den in dem gerade adressierten Speicherbereich gespeicherten momentanen Zählerstand bereit. Dieser momentane Zählerstand, der beispielsweise der Anfangszählerstand "0" sein möge, wird dabei über Ladeeingänge in das Register RAN übernommen. Der mit diesem Register verbundene Addierer ADD inkrementiert daraufhin den momentanen Zählerstand um den Binärwert "1". Der daraus resultierende veränderte momentane Zählerstand wird anschließend in das Register RAN eingetragen, und zwar unter Überschreiben des zuvor über Ladeeingänge aufgenommenen Zählerstandes. Anschließend erfolgt unter der Steuerung der Steuereinrichtung ST ein Schreibzyklus in dem Zählerstandspeicher ZSP. Dabei wird der nunmehr in dem Register RAN gespeicherte momentane Zählerstand in den durch den Decodierer DEC über den Multiplexer M adressierten Speicherbereich eingetragen und damit der bisher gespeicherte momentane Zählerstand überschrieben. Damit ist die Registrierung der gerade in die in FIG 2 dargestellte Behandlungseinrichtung BHE aufgenommenen Nachrichtenzelle abgeschlossen.

Die gerade erläuterten Vorgänge wiederholen sich mit jedem Auftreten einer Nachrichtenzelle auf der in FIG 2 mit E bezeichneten Zubringerleitung, so daß für sämtliche über diese verlaufenden virtuellen Verbindungen ein individuell ermittelter momentaner Zählerstand in dem Zählerstandspeicher ZSP gespeichert ist.

Der Addierer ADD ist im übrigen so ausgelegt, daß dieser bei der zuvor angegebenen Bildung eines neuen momentanen Zählerstandes gleichzeitig ein Überschreiten eines festgelegten maximalen Zählerstandes überwacht und bei einem solchen Überschreiten ein Überlaufsignal in Form eines Überlaufbits über den oben erwähnten Überlaufausgang abgibt. Die aus den einzelnen Speicherbereichen des Zählerstandspeichers ZSP und dem Addierer ADD gebildeten Zähleinrichtungen stellen dabei periodisch umlaufende Zähleinrichtungen dar, welche mit jedem Erreichen des maximalen Zählerstandes ein Überlaufsignal bereitstellen.

Ein von dem Addierer ADD abgegebenes Überlaufbit wird in den bereits oben erwähnten gesonderten Registerplatz des Registers RAN übernommen. Dieser Registerplatz kann beispielsweise im Zuge eines nachfolgenden, bereits oben erwähnten Lesezyklus von der Steuereinrichtung ST her hinsichtlich des Vorliegens eines Überlaufbits abgefragt werden. Es kann jedoch auch so vorgegangen sein, daß ein in dem Registerplatz auftretendes Überlaufbit direkt der Steuereinrichtung ST zugeführt ist, um in dieser eine Unterbrechungsroutine zu aktivieren, in deren Verlauf die Steuereinrichtung anhand der dem Zählerstandspeicher gerade zugeführten Adressensignale die jeweilige virtuelle Verbindung ermittelt. Unabhängig davon, in welcher Weise der Steuereinrichtung Überlaufbits zugeführt sind, werden diese von der Steuereinrichtung verbindungsindividuell registriert.

Die vorstehend erläuterten Steuerungsvorgänge wiederholen sich für jede der virtuellen Verbindungen bis zu deren Abbau. Im Zuge eines solchen Abbaus wird dann von der Steuereinrichtung ST her der für die jeweilige virtuelle Verbindung in dem Zählerstandspeicher ZSP gespeicherte momentane Zählerstand abgefragt und für eine nachfolgende Gebührenerfassung mit der in der Steuereinrichtung für die jeweilige virtuelle Verbindung bereits registrierten Anzahl von Überlaufbits zu einem Gesamtzählerstand zusammengefaßt.

Anstelle der Registrierung von Überlaufbits für die einzelnen virtuellen Verbindungen kann auch so vorgegangen sein, daß die Kapazität des Addierers ADD sowie die Speicherkaflazität der einzelnen Speicherbereiche des Zählerstandspeichers ZSP so festgelegt sind, daß selbst bei einer Übertragung von Nachrichtenzellen mit der höchstmöglichen Übertragungsbitrate ein Überlauf der zuvor beschriebenen Zähleinrichtungen ausgeschlossen ist. In diesem Falle braucht von der Steuereinrichtung ST her im Zuge des Abbaus einer virtuellen Verbindung für eine nachfolgende Gebührenerfassung lediglich der dieser zugeordnete momentane Zählerstand durch eine entsprechende Ansteuerung des Zählerstandspeichers ZSP abgefragt werden.

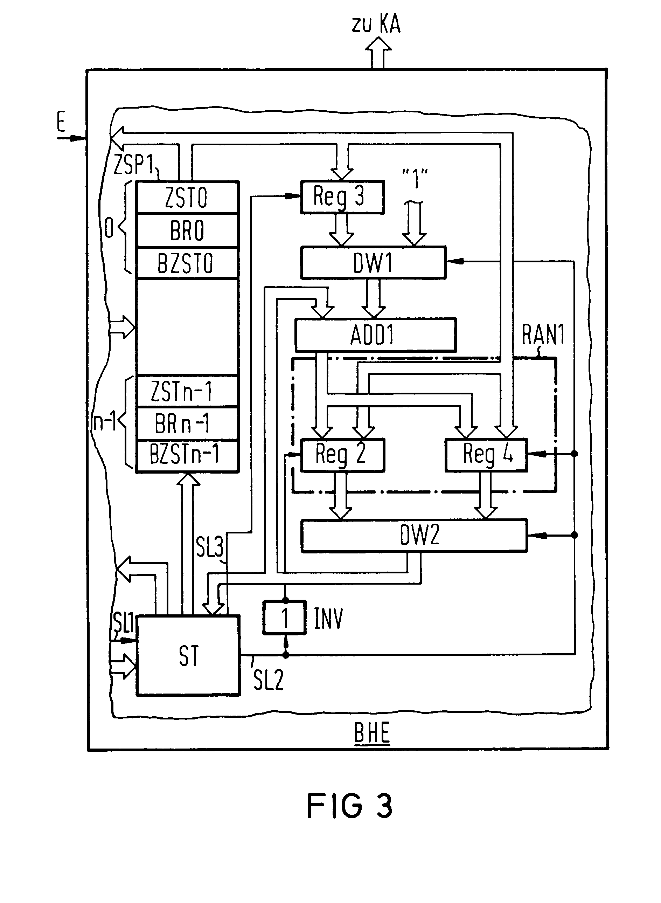

In FIG 3 ist ein zweites Ausführungsbeispiel für die in FIG 1 schematisch dargestellten Behandlungseinrichtungen BHE dargestellt. Dabei sind lediglich die gegenüber FIG 2 modifizierten Schaltungsteile angegeben.

Ein Zählerstandspeicher ZSP1 weist wiederum eine der Anzahl der über die zugeordnete Zubringerleitung E möglicherweise verlaufenden virtuellen Verbindungen entsprechende Anzahl von Speicherbereichen auf. Die einzelnen Speicherbereiche sind dabei wieder mit "0" bis "n-1" bezeichnet. In diesen Speicherbereichen sind jeweils neben einem bereits oben erwähnten momentanen Zählerstand (ZST0 bis ZSTn-1 in FIG 2), der im folgenden als momentaner erster Zählerstand bezeichnet ist, ein momentaner zweiter Zählerstand sowie ein für die jeweilige virtuelle Verbindung individuell festlegbarer Bitratenwert gespeichert. Diese Speicherung erfolgt unter der Steuerung der in FIG 3 mit ST bezeichneten Steuereinrichtung. Die für die virtuellen Verbindungen gespeicherten momentanen zweiten Zählerstände und Bitratenwerte sind im übrigen entsprechend ihrer Zugehörigkeit zu den einzelnen virtuellen Verbindungen in FIG 3 mit BZST0 bis BZSTn-1 bzw. mit BR0 bis BRn-1 bezeichnet.

Jeder der Speicherbereiche des Zählerstandspeichers ZSP1 ist wieder Teil einer individuellen Zähleinrichtung, wobei sämtlichen Zähleinrichtungen eine gemeinsame, den einzelnen Zähleinrichtungen im Multiplexbetrieb zur Verfügung stehende Addiereinrichtungen zugehörig ist. Diese Addiereinrichtung weist einen Addierer ADD1 sowie eine Registeranordnung RAN1 auf. Diese Registeranordnung besteht aus zwei Registern Reg2 und Reg4, die über Dateneingänge gemeinsam an Summensignalausgänge des Addierers und über Datenausgänge an gesonderte Dateneingänge einer Datenweiche DW2 angeschlossen sind. Außerdem stehen Ladeeeingänge beider Register über ein Leitungssystem mit Datenausgängen des Zählerstandspeichers ZSP1 in Verbindung.

Datenausgänge der Datenweiche DW2 stehen mit der Steuereinrichtung ST und mit ersten Eingängen des zuvor erwähnten Addierers ADD1 in Verbindung. Zweite Eingänge dieses Addierers sind über eine zweite Datenweiche DW1 entweder mit einem Binärwert "1" oder mit einem Bitratenwert, der von dem Zählerstandspeicher ZSP1 her in ein Register Reg3 ladbar ist, beaufschlagt.

Von der steuereinrichtung ST her führen schließlich eine Steuerleitung SL2 zu Steuereingängen der beiden Datenweichen DW1 und DW2 und der Register Reg2 und Reg4 sowie eine weitere Steuerleitung SL3 zu einem Steuereingang des Registers Reg 3. Dabei ist dem Steuereingang des Registers Reg2 ein Inverter INV vorgeschaltet.

Nachdem zuvor der Aufbau der in FIG 3 dargestellten Behandlungseinrichtung BHE erläutert worden ist, wird nunmehr auf die Wirkungsweise einer solchen Behandlungseinrichtung näher eingegangen.

Wie bereits erwähnt, werden in die den einzelnen virtuellen Verbindungen zugeordneten Speicherbereiche des Zählerstandspeichers ZSP1 individuell festgelegte Bitratenwerte BRO bis BRn-1 eingetragen. Die Festlegung erfolgt im Zuge des Aufbaus der jeweiligen virtuellen Verbindung durch die Steuereinrichtung ST, und zwar nach Maßgabe einer Übertragungsbitrate, die von der die gerade aufzubauende Verbindung wünschenden Teilnehmereinrichtung (rufende Teilnehmereinrichtung) angegeben ist. Dabei kann so vorgegangen sein, daß durch die Steuereinrichtung ST einer maximal angebbaren Übertragungsbitrate ein normierter Bitratenwert, beispielsweise der Bitratenwert "1", zugeordnet wird. Für eine von der maximal angebbaren Übertragungsbitrate abweichende Übertragungsbitrate beträgt dagegen der zugeordnete Bitratenwert ein dem Verhältnis der maximal angebbaren Übertragungsbitrate zu der aktuellen Übertragungsbitrate entsprechendes Vielfaches des normierten Bitratenwertes. Beträgt also eine von einer Teilnehmereinrichtung angegebene Übertragungsbitrate lediglich die Hälfte der maximal angebbaren Übertragungsbitrate, so wird der Bitratenwert "2" festgelegt. Nach einer solchen Festlegung wird der jeweilige Bitratenwert im Zuge eines Schreibzyklus von der Steuereinrichtung ST her in den für die jeweilige virtuelle Verbindung in Frage kommenden Speicherbereich des Zählerstandspeichers ZSP1 für die gesamte Verbindungsauer eingetragen. Für dieses Eintragen wird der Speicherbereich über den in FIG 2 dargestellten Multiplexer M adressiert. Außerdem wird in diesen Speicherbereich ein im Zusammenhang mit FIG 2 bereits erwähnter Anfangszählerstand als momentaner erster Zählerstand eingetragen. Die in den einzelnen Speicherbereichen eingetragenen momentanen ersten Zählerstände sind in FIG 3 mit ZST0 bis ZSTn-1 bezeichnet.

Von der Steuereinrichtung ST her werden außerdem im Zuge periodisch wiederholt durchgeführter Speicherzyklen jeweils sämtliche Speicherbereiche des Zählerstandspeichers ZSP1 nacheinander für eine noch zu erläuternde Abfrage des darin jeweils gespeicherten momentanen zweiten Zählerstandes (BZST0 bis BZSTn-1) angesteuert. Nach erfolgter Abfrage wird dann der jeweilige momentane zweite Zählerstand in einen festgelegten Anfangszählerstand überführt. Der Anfangszählerstand möge dabei beispielsweise mit "0" festgelegt sein.

Tritt nun auf der in FIG 3 mit E bezeichneten Zubringerleitung eine Nachrichtenzelle auf, so aktiviert die Steuereinrichtung ST einen Steuerzyklus, wie es bereits anhand der FIG 2 erläutert worden ist. Im Zuge dieses Steuerzyklus wird bei dem in FIG 3 dargestellten Ausführungsbeispiel zunächst in dem Zählerstandspeicher ZSP1 nach Maßgabe der diesem gerade zugeführten Adressensignale ein Lesezyklus durchgeführt. Dadurch stellt der Zählerstandspeicher an seinen Datenausgängen nacheinander die in dem gerade adressierten Speicherbereich gespeicherten Angaben bereit. Wie bereits oben erwähnt, handelt es sich bei diesen Angaben um einen für die jeweilige virtuelle Verbindung festgelegten Bitratenwert, einen momentanen ersten Zählerstand und um einen momentanen zweiten Zählerstand. Der momentane erste Zählerstand wird dabei über die obengenannten Ladeeingänge in das Register Reg2, der momentane zweite Zählerstand dagegen in das Register Reg4 übernommen. Der zusätzlich bereitgestellte Bitratenwert wird dem Register Reg3 zugeführt. Die genannten Register sind dafür durch von der Steuereinrichtung ST her abgegebene Steuersignale entsprechend gesteuert.

Die beiden Datenweichen DW1 und DW2 werden anschließend von der Steuereinrichtung ST her so eingestellt, daß die Register Reg3 und Reg4 mit ihren Datenausgängen an die Eingänge des Addierers ADD1 angeschlossen sind. Der Addierer ADD1 addiert daraufhin den Bitratenwert zu dem momentanen zweiten Zählerstand, d.h. bei dem oben angegebenen Beispiel zu dem Anfangszählerstand "0". Der daraus resultierende veränderte momentane zweite Zählerstand wird anschließend in das Register Reg4 eingetragen, und zwar unter Überschreiben des zuvor über Ladeeingänge aufgenommenen Zählerstandes. Daraufhin erfolgt eine Umsteuerung der Datenweichen DW1 und DW2 sowie der Register Reg2 und Reg4, so daß nunmehr einerseits die Datenausgänge des Registers Reg2 mit dem Addierer ADD1 verbunden sind und andererseits dieser Addierer zusätzlich über die Datenweiche DW1 mit dem oben angegebenen Zahlenwert (Binärwert "1") beaufschlagt ist. Der Addierer addiert damit diesen Zahlenwert zu dem in dem Register Reg2 gerade gespeicherten momentanen ersten Zählerstand. Der daraus resultierende geänderte momentane erste Zählerstand wird anschließend in das Register Reg2 eingetragen, und zwar unter Überschreiben des zuvor darin gespeicherten momentanen ersten Zählerstandes. Hieran schließt sich ein von der Steuereinrichtung ST her aktivierter Schreibzyklus in dem Zählerstandspeicher ZSP1 an. Dabei werden die gerade in den beiden Registern Reg2 und Reg4 gespeicherten momentanen Zählerstände als aktuelle momentane Zählerstände in den zuvor bereits adressierten Speicherbereich des Zählerstandspeichers ZSP1 eingetragen. Damit ist der Steuerzyklus für die Erfassung der gerade in die in FIG 3 dargestellte Behandlungseinrichtung BHE aufgenommenen Nachrichtenzelle abgeschlossen.

Die gerade erläuterten Vorgänge wiederholen sich mit jedem Auftreten einer Nachrichtenzelle auf der in FIG 3 mit E bezeichneten Zubringerleitung.

Auch bei dem in FIG 3 dargestellten zweiten Ausführungsbeispiel werden in den einzelnen Speicherbereichen des Zählerstandspeichers ZSP1 die momentanen ersten Zählerstände bis zum Abbau der jeweiligen virtuellen Verbindung in der zuvor beschriebenen Weise aktualisiert. Auf den Abbau einer solchen virtuellen Verbindung hin erfolgt dann eine Abfrage des in Frage kommenden momentanen ersten Zählerstandes für eine nachfolgende Gebührenerfassung.

Wie bereits oben erwähnt, werden von der Steuereinrichtung ST her zusätzlich periodisch wiederholt Speicherzyklen aktiviert, um die in den einzelnen Speicherbereichen des Zählerstandspeichers ZSP1 gespeicherten momentanen zweiten Zählerstände abzufragen und anschließend den jeweiligen momentanen zweiten Zählerstand in den festgelegten Anfangszählerstartd zu überführen.

Bei einer solchen Abfrage wird dabei überprüft, ob der jeweilige momentane zweite Zählerstand oberhalb eines für sämtliche virtuellen Verbindungen einheitlich festgelegten maximalen ZählerSstandes liegt. Dieser maximale Zählerstand ist nach Maßgabe der oben erläuterten Bitratenwerte und der Dauer eines Zeitintervalls zwischen zwei aufeinanderfolgenden Speicherzyklen so festgelegt, daß dieser durch einen momentanen zweiten Zählerstand immer dann erreicht bzw. überschritten wird, wenn im Zuge der jeweiligen virtuellen Verbindung Nachrichtenzellen mit einer gegenüber der ursprünglich von einer Teilnehmereinrichtung angegebenen Übertragungsbitrate höheren Übertragungsbitrate übertragen werden. Beim Überschreiten des maximalen Zählerstandes kann dann beispielsweise so vorgegangen sein, daß im Zuge der jeweiligen virtuellen Verbindung die nächste nachfolgende Nachrichtenzelle oder nachfolgende Nachrichtenzellen von einer weiterleitung an die in FIG 1 dargestellte Koppelanordnung KA ausgeschlossen ist bzw. sind.

Bezüglich des in FIG 3 dargestellten Addierers ADD1 sei noch darauf hingewiesen, daß dieser auch so ausgelegt sein kann, daß dieser bei der oben angegebenen Bildung eines momentanen ersten Zählerstandes bzw. momentanen zweiten Zählerstandes ein Überschreiten des festgelegten maximalen Zählerstandes durch ein Überlaufsignal in Form eines Überlaufbits an einem gesonderten Überlaufausgang anzeigt. Ein solches Überlaufbit kann dann in einen gesonderten Registerplatz des Registers Reg2 bzw. Reg4 übernommen werden. Die Behandlung eines in dem Register Reg2 gespeicherten Überlaufbits kann dabei in der im Zusammenhang mit FIG 2 erläuterten Weise erfolgen. Ein in dem Register Reg4 gespeichertes Überlaufbit kann dagegen als Teil des von dem Addierer ADD1 bereitgestellten momentanen zweiten Zählerstandes in den Zählerstandspeicher ZSP1 übertragen werden. Im Zuge eines zuvor erläuterten Speicherzyklus in dem Zählerstandspeicher ZSP1 zur Abfrage der einzelnen momentanen zweiten Zählerstände ist dann lediglich zu überprüfen, ob mit dem jeweiligen momentanen zweiten Zählerstand ein Überlaufbit gespeichert ist.

Bei dem vorstehend beschriebenen zweiten Ausführungsbeispiel (FIG 3) verändern sich die Toleranzgrenzen für die Anzeige des Überschreitens angegebener Übertragungsbitraten aufgrund der oben erläuterten Festlegung der individuellen Bitratenwerte und des einheitlichen maximalen Zählerstandes umgekehrt proportional zu den angegebenen Übertragungsbitraten. Ist für die einzelnen angebbaren Übertragungsbitraten eine individuelle Festlegung einer solchen Toleranzgrenze gewünscht, so kann das vorstehend beschriebene Ausführungsbeispiel auch derart modifiziert sein, daß für jede der virtuellen Verbindungen ein maximaler Zählerstand sowie ein diesem zugeordneter Bitratenwert individuell nach Maßgabe einer angegebenen Übertragungsbitrate, der Dauer des Zeitintervalls zwischen zwei aufeinanderfolgenden Speicherzyklen sowie der jeweils gewünschten Toleranzgrenze ermittelt werden. Maximale Zählerstände und zugehörige Bitratenwerte werden dabei gemeinsam in die oben erwähnten, den einzelnen virtuellen Verbindungen zugeordneten Speicherbereiche des Zählerstandspeichers ZSP1 eingetragen. Bei der Durchführung eines oben beschriebenen Lesezyklus werden dann dem Addierer ADD1 beispielsweise über ein gegenüber dem in FIG 3 dargestellten Register Reg3 erweitertes Register sowohl der jeweilige Bitratenwert als auch der diesem zugeordnete maximale Zählerstand zugeführt. Anhand dieser Werte bestimmt der Addierer zunächst in der oben angegebenen Weise einen neuen momentanen zweiten Zählerstand. Dieser wird anschließend mit dem zugeführten maximalen Zählerstand verglichen, wobei bei dessen Überschreiten durch den gerade ermittelten momentanen zweiten Zählerstand von dem Addierer ADD1 her ein dem bereits oben erwähnten Überlaufsignal entsprechendes Vergleichssignal abgegeben wird. Die daraufhin durchzuführenden Steuerungsvorgänge entsprechen dann den bereits oben erläuterten Steuerungsvorgängen.

Bezüglich des in FIG 3 dargstellten Ausführungsbeispiels wurde zuvor lediglich der Fall betrachtet, daß im Zuge der virtuellen Verbindungen Nachrichtensignale in Nachrichtenzellen fester Länge übertragen werden. Weisen dagegen derartige Nachrichtenzellen eine variable Länge auf, so können die zuvor beschriebenen Steuerzyklen auch derart modifiziert sein, daß mit jedem Auftreten einer Nachrichtenzelle sowohl der momentane erste Zählerstand als auch der momentane zweite Zählerstand in der oben angegebenen Weise beispielsweise nach jeweils einer festgelegten Anzahl von der gerade auftretenden Nachrichtenzelle zugehörigen Bits verändert wird. Die Anzahl der Bits richtet sich dabei nach der Genauigkeit, mit der die Überwachung angegebener Übertragungsbitraten bzw. die Gebührenermittlung erfolgen soll.

Außerdem sei auch noch darauf hingewiesen, daß das vorstehend beschriebene zweite Ausführungsbeispiel auch derart modifiziert sein kann, daß ein bei der Bildung eines momentanen zweiten Zählerstandes am Ausgang des Addierers ADD1 auftretendes Überlaufbit direkt der Steuereinrichtung ST zugeführt ist, um von dieser her sofort die Weiterleitung der nächsten nachfolgenden Nachrichtenzelle oder der nachfolgenden Nachrichtenzellen für die jeweilige virtuelle Verbindung zu verhindern.

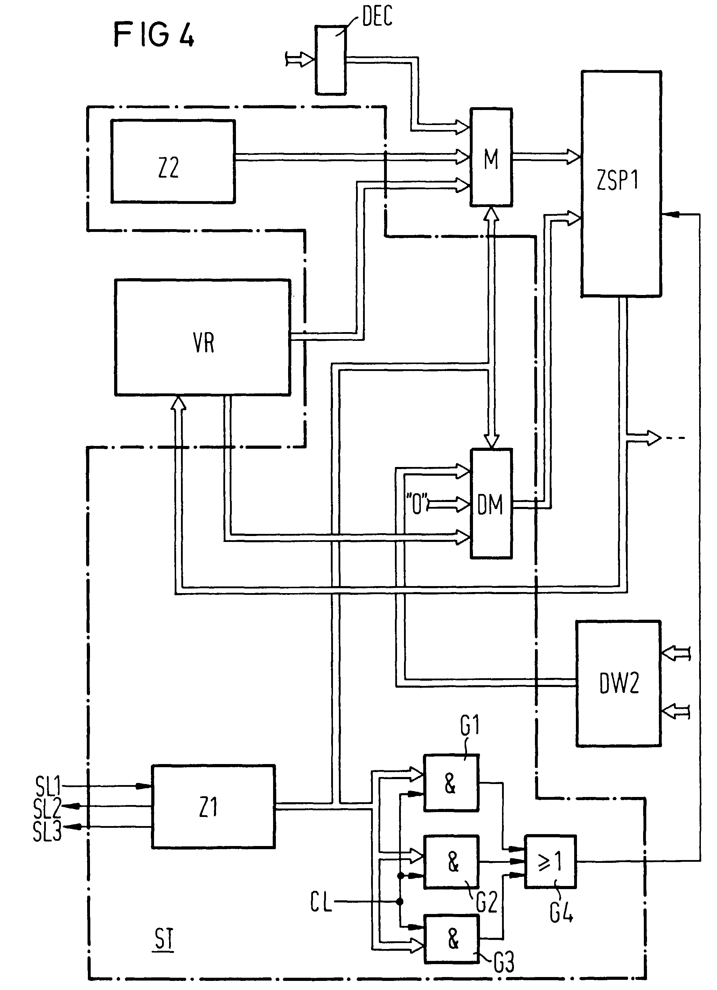

In FIG 4 sind ein Ausführungsbeispiel der anhand der FIG 3 erläuterten Steuereinrichtung ST sowie deren Verbindung zu den in FIG 3 angegebenen Schaltungselementen dargestellt. Dabei wird für die nachfolgende Erläuterung als Beispiel davon ausgegangen, daß die zuvor erwähnten ersten und zweiten Zählerstände für die einzelnen virtuellen Verbindungen ohne gesondertes Setzen von Überlaufbits in den Registern Reg2 und Reg4 (FIG 3) in den Zählerstandspeicher ZSP1 eingetragen sowie Nachrichtenzellen fester Länge und in Übertragungspausen diesen entsprechende Leerzellen übertragen werden.

Gemäß FIG 4 weist die Steuereinrichtung ST eine erste, mit den Steuerleitungen SL1, SL2 und SL3 (FIG 3) verbundene Zähleranordnung Z1 auf, die durch ein über die Steuerleitung SL1 übertragenes Steuersignal synchronisiert wird und mit einer der Anzahl der in einer Nachrichtenzelle bzw. Leerzelle auftretenden Oktetts entsprechenden Zählperiode umläuft. Dabei werden von dieser drei festgelegte Zählerstände als Adressensignale bereitgestellt. Diese Adressensignale werden an drei jeweils auf eines dieser Adressensignale ansprechende UND-Glieder G1 bis G3 abgegeben. Die UND-Glieder sind außerdem gemeinsam mit Taktimpulsen CL beaufschlagt, so daß von diesen UND-Gliedern nacheinander innerhalb einer Nachrichtenzelle bzw. Leerzelle eine vorgegebene Anzahl von Taktimpulsen bereitgestellt wird, die über ein nachgeschaltetes ODER-Glied G4 dem Zählerstandspeicher ZSP1 als Schreibimpulse zugeführt sind.

Außerdem werden die von der Zähleranordnung Z1 bereitgestellten Adressensignale an Steuereingänge des in FIG 3 schematisch dargestellten, als Adressenmultiplexer dienenden Multiplexers M und eines diesem zugeordneten Datenmultiplexers DM abgegeben. Die Ausgänge dieser Multiplexer sind an Adressen- und Dateneingänge des Zählerstandspeichers ZSP1 herangeführt. Eingangsseitig sind an den Multiplexer M über drei Leitungssysteme neben dem bereits in FIG 3 dargestellten Decodierer DEC eine zweite Zähleranordnung Z2 sowie ein Adressenbus eines sämtlichen Behandlungseinrichtungen BHE (FIG 2) übergeordneten Vermittlungsrechners VR beispielsweise in Form einer Mikroprozessoranordnung angeschlossen. Durch die Zähleranordnung Z2, die mit einer der Anzahl der in dem Zählerstandspeicher ZSP1 vorhandenen Speicherbereiche entsprechenden Zählperiode umläuft, werden dabei fortlaufend Adressensignale nach Maßgabe der Dauer eines oben erwähnten, periodisch wiederholt durchgeführten Speicherzyklus bereitgestellt.

Darüber hinaus sind an den Datenmultiplexer DM über drei Leitungssysteme eingangsseitig die in FIG 3 dargestellte Datenweiche DW2, ein festgelegter Anfangszählerstand beispielsweise in Form eines Binärwertes "0" sowie ein Datenbus des Vermittlungsrechners VR herangeführt.

Durch die von der Zähleranordnung Z1 abgegebenen Adressensignale werden innerhalb einer Nachrichtenzelle bzw. Leerzelle drei gesonderte Bearbeitungszeitspannen festgelegt. Eine erste der Bearbeitungszeitspannen, während der der Decodierer DEC und die Datenweiche DW2 über die Multiplexer M und DM mit dem Zählerstandspeicher ZSP1 verbunden sind, dient dabei bei Auftreten einer Nachrichtenzelle für das Auslesen des zugeordneten ersten bzw. zweiten Zählerstandes und des festgelegten Bitratenwertes aus dem Zählerstandspeicher und für das anschließende Einschreiben des aktualisierten ersten bzw. zweiten Zählerstandes in diesen Zählerstandspeicher. Dafür werden von der Zähleranordnung Z1 her auch die für die Steuerung der Datenweichen DW1 und DW2 und der Register Reg2, Reg3 und Reg4 (FIG 3) erforderlichen Steuersignale über die Steuerleitungen SL2 und SL3 bereitgestellt.

Eine zweite Bearbeitungszeitspanne, während der die Zähleranordnung Z2 sowie der Anfangszählerstand über die Multiplexer M und DM mit dem Zählerstandspeicher verbunden sind, ist für die im Rahmen der oben erwähnten Speicherzyklen periodisch vorgesehene Abfrage der in dem Zählerstandstandspeicher gespeicherten zweiten Zählerstände und für das anschließende Überführen des jeweiligen zweiten Zählerstandes in den festgelegten Anfangszählerstand reserviert. Da durch die Zähleranordnung Z2 fortlaufend Adressensignale bereitgestellt werden, erfolgt im Zuge eines über eine Mehrzahl von Nachrichtenzellen bzw. Leerzellen sich erstreckenden Speicherzyklus für sämtliche in dem Zählerstandspeicher ZSP1 gespeicherten zweiten Zählerstände eine Abfrage und anschließende Überführung in den Anfangszählerstand. Die Auswertung der einzelnen abgefragten zweiten Zählerstände erfolgt im übrigen durch den Vermittlungsrechner VR.

Während einer dritten Bearbeitungszeitspanne steht schließlich der Vermittlungsrechner VR mit seinem Adressbus und Datenbus über die Multiplexer M und DM mit dem Zählerstandspeicher ZSP1 in Verbindung. Dadurch können durch diesen Vermittlungsrechner einerseits bei Aufbau einer virtuellen Verbindung die oben erwähnten Anfangsszählerstände sowie der für diese virtuelle Verbindung festgelegte Bitratenwert in den in Frage kommenden Speicherbereich des Zählerstandspeichers eingetragen werden. Andererseits kann bei Abbau einer virtuellen Verbindung der für diese in Frage kommende, in dem Zählerstandspeicher gespeicherte erste Zählerstand für eine Auswertung übernommen werden.

Abschließend sei darauf hingewiesen, daß es sich bei der gerade erläuterten Steuereinrichtung lediglich um ein zweckmäßiges Ausführungsbeispiel handelt. Die von dieser Steuereinrichtung zu erfüllenden Funktionen können jedoch auch durch einen anderweitigen schaltungstechnischen Aufbau realisiert werden. Darüber hinaus kann die in FIG 4 dargestellte Steuereinrichtung bei dem anhand der FIG 2 erläuterten Ausführungsbeispiel auch derart modifiziert sein, daß durch diese lediglich die in den zuvor erläuterten ersten und dritten Bearbeitungszeitspannen vorgesehenen Abläufe gesteuert werden. Damit entfallen die mit dem Multiplexer M verbundene Zähleranordnung Z2 sowie die Bereitstellung des Anfangszählerstandes am Datenmultiplexer DM. Außerdem sind von der Zähleranordnung Z1 her lediglich noch zwei Adressensignale für die beiden Multiplexer und für zwei UND-Glieder G1 und G2 bereitzustellen.

## Patentansprüche

1. Schaltungsanordnung zum Ermitteln der einer ATM-Vermittlungsanlage (BVA) über Zubringerleitungen (E1,...,En) jeweils zugeführten Nachrichtensignalmenge bei der Übertragung von Nachrichtenzellen nach einem asynchronen Übertragungsverfahren im Zuge von über die Zubringerleitungen verlaufenden virtuellen Verbindungen und zur Überprüfung der Einhaltung festgelegter Übertragungsbitraten für die einzelnen virtuellen Verbindungen,
wobei den Zubringerleitungen (E1,...,En) jeweils eine der Anzahlder über diese verlaufenden virtuellen Verbindungen entsprechende Anzahl von Zähleinrichtungen (ZSP1, RAN1, ADD1) zugeordnet ist,
wobei die Zähleinrichtungen jeweils aus einem individuellen, einem Schreib-Lese-Speicher (ZSP1) zugehörigen Speicherbereich, welcher zumindest für die Speicherung eines momentanen ersten Zählerstandes, eines momentanen zweiten Zählerstandes sowie eines einer für die jeweilige virtuelle Verbindung festgelegten Übertragungsbitrate entsprechenden Bitratenwertes dient, sowie aus einer mit diesem Schreib-Lese-Speicher verbundenen, sämtlichen Zähleinrichtungen gemeinsamen Addiereinrichtung (RAN1,ADD1) gebildet sind,
wobei in die einzelnen Speicherbereiche jeweils einerseits im Zuge des Aufbaus der zugeordneten virtuellen Verbindung ein festgelegter Anfangszählerstand als erster momentaner Zählerstand und andererseits im Zuge periodisch wiederholt durchgeführter Speicherzyklen jeweils ein festgelegter Anfangszählerstand als momentaner zweiter Zählerstand eintragbar ist,
wobei die einzelnen Speicherbereiche bei Auftreten von Nachrichtenzellen nach Maßgabe des in diesen jeweils enthaltenen Zellenkopfes individuell für die Übertragungsdauer der jeweiligen Nachrichtenzelle in einen Steuerzyklus einbeziehbar sind, in dessen Verlauf zunächst der in dem jeweiligen Speicherbereich gespeicherte momentane erste Zählerstand, momentane zweite Zählerstand sowie Bitratenwert der Addiereinrichtung (RAN1, ADD1) zugeführt sind,
wobei die Schaltung derart ausgestaltet ist,
daß durch die Addiereinrichtung im Zuge des gerade ablaufenden Steuerzyklus einerseits der momentane erste Zählerstand wenigstens einmal um eine Zähleinheit und andererseits der momentane zweite Zählerstand wenigstens einmal um den zugehörigen Bitratenwert verändert wird,
daß anschließend der daraus resultierende momentane erste bzw. zweite Zählerstand in den jeweiligen Speicherbereich unter Überschreiben des darin bisher gespeicherten momentanen ersten bzw. zweiten Zählerstandes eingetragen wird,
daß durch die Addiereinrichtung (RAN1, ADD1) bei Überschreiten eines für die jeweilige virtuelle Verbindung festgelegten maximalen zweiten Zählerstandes durch den gerade bereitgestellten momentanen zweiten Zählerstand ein das Überschreiten der für die jeweilige virtuelle Verbindung festgelegten Übertragungsbitrate anzeigendes erstes Meldesignal bereitgestellt wird und daß die einzelnen in den Speicherbereichen gespeicherten momentanen ersten Zählerstände jeweils im Zuge des Abbaues der zugeordneten virtuellen Verbindung für eine Auswertung bereitgestellt werden.

2. Schaltungsanordnung nach Anspruch 1,
**dadurch gekennzeichnet**,
daß auf eine bei Auftreten einer Nachrichtenzelle erfolgende Ansteuerung einer der Zähleinrichtungen (ZSP1, RAN1, ADD1) hin deren momentaner erster Zählerstand nach jeweils einer festgelegten Anzahl von der gerade auftretenden Nachrichtenzelle zugehörigen Bits um eine Zähleinheit verändert ist.

3. Schaltungsanordnung nach Anspruch 1 oder 2,
**dadurch gekennzeichnet**,
daß die aus einem individuellen Speicherbereich des Schreib-Lese-Speichers (ZSPl) und der Addiereinrichtung (RAN1, ADD1) jeweils bestehenden Zähleinrichtungen zur Erfassung der momentanen ersten Zählerstände als periodisch umlaufende Zähleinrichtungen ausgebildet sind und daß von der Addiereinrichtung her mit jedem Überschreiten eines festgelegten maximalen ersten Zählerstandes durch ein von dieser gerade ermittelten momentanen ersten Zählerstand ein zweites Meldesignal gesondert bereitgestellt ist.

4. Schaltungsanordnung nach Anspruch 1,
**dadurch gekennzeichnet**,
daß im Zuge eines bei Auftreten einer Nachrichtenzelle hin aktivierten Steuerzyklus von der Addiereinrichtung (RAN1, ADD1) ein zunächst in dem jeweiligen Speicherbereich des Schreib-Lese-Speichers (ZSPl) gespeicherter momentaner zweiter Zählerstand nach jeweils einer festgelegten Anzahl von der gerade auftretenden Nachrichtenzelle zugehörigen Bits um den in dem jeweiligen Speicherbereich gespeicherten Bitratenwert veränderbar ist.

5. Schaltungsanordnung nach einem der Ansprüche 1 bis 4,
**dadurch gekennzeichnet,**
daß einer maximal festlegbaren Übertragungsbitrate ein normierter Bitratenwert ("1") zugeordnet ist,
daß nach Maßgabe dieses normierten Bitratenwertes und eines festgelegten Zeitintervalls zwischen zwei aufeinanderfolgenden Speicherzyklen für sämtliche virtuellen Verbindungen ein einheitlicher maximaler zweiter Zählerstand festgelegt ist,
und daß bei einer von der maximal festlegbaren Übertragungsbitrate abweichenden, für die jeweilige virtuelle Verbindung festgelegten aktuellen Übertragungsbitrate der zugeordnete Bitratenwert ein dem Verhältnis der maximal festlegbaren Übertragungsbitrate zu der aktuellen Übertragungsbitrate entsprechendes Vielfaches des normierten Bitratenwertes beträgt.

6. Schaltungsanordnung nach einem der Ansprüche 1 bis 4,
**dadurch gekennzeichnet**,
daß für jede der virtuellen Verbindungen der Bitratenwert und der maximale zweite Zählerstand gesondert nach Maßgabe der für die jeweilige virtuelle Verbindung festgelegten Übertragungsbitrate und des festgelegten Zeitintervalls zwischen zwei aufeinanderfolgenden Speicherzyklen bestimmt sind.

7. Schaltungsanordnung nach einem der Ansprüche 1 bis 6,
**dadurch gekennzeichnet**,
daß der Addiereinrichtung ein Addierer (ADD1) und eine diesem nachgeschaltete, aus zwei gesonderten Registern gebildete Registeranordnung (RAN1) zugehörig sind,
daß im Zuge eines Steuerzyklus von dem Schreib-Lese-Speicher (ZSPl) her über Ladeeingänge in ein erstes der Register (Reg2) ein in dem für den jeweiligen Steuerzyklus in Frage kommenden Speicherbereich des Schreib-Lese-Speichers gespeicherter momentaner erster Zählerstand, in ein zweites der Register (Reg4) dagegen der zusammen mit diesem momentanen ersten Zählerstand gespeicherte momentane zweite Zählerstand aufnehmbar ist,
daß der momentane erste Zählerstand und der momentane zweite Zählerstand nacheinander in einer festgelegten Reihenfolge von dem jeweiligen Register her über eine erste steuerbare Datenweiche (DW2) ersten Eingängen des Addierers (ADD1) zuführbar sind, daß der Addierer an zweiten Eingängen über eine zusammen mit der ersten Datenweiche steuerbare zweite Datenweiche (DW1) je nach der Steuerung der Datenweichen entweder mit einem der für die Veränderung des jeweiligen momentanen ersten Zählerstandes festgelegten Zähleinheit entsprechenden Zahlenwert oder von dem Schreib-Lese-Speicher (ZSPl) her mit einem zusammen mit dem jeweiligen momentanen zweiten Zählerstand gespeicherten Bitratenwert beaufschlagt ist,
daß ein von dem Addierer (ADD1) bereitgestellter veränderter momentaner erster Zählerstand bzw. momentaner zweiter Zählerstand über Dateneingänge in das jeweilige Register (Reg2 bzw. Reg4) eintragbar ist, und zwar unter Überschreiben des bisher darin eingetragenen momentanen ersten Zählerstandes bzw. momentanen zweiten Zählerstandes,
und daß am Ende des jeweiligen Steuerzyklus ein in dem jeweiligen Register (Reg2 bzw. Reg4) eingetragener, zuvor gegebenenfalls im Zuge des Steuerzyklus durch wiederholte Aufnahme in den Addierer (ADD1) und anschließendes Eintragen in das jeweilige Register mehrfach veränderter momentaner erster Zählerstand bzw. momentaner zweiter Zählerstand über die erste Datenweiche (DW2) in den in Frage kommenden Speicherbereich des Schreib-Lese-Speichers (ZSPl) eintragbar ist.

## Claims

1. Circuit arrangement for determining the quantity of message signals respectively supplied to an ATM switching system (BVA) via incoming trunks (E1,...,En) in the transmission of message cells based on an asynchronous transmission method in the course of virtual connections over the incoming trunks and for checking compliance with specified transmission bit rates for the individual virtual connections, the incoming trunks (E1,...En) being respectively assigned a number of counting means (ZSP1, RAH1, ADD1) corresponding to the number of virtual connections over them, the counting means being respectively formed by an individual memory area, which is associated with a read-write memory (ZSP1) and serves at least for the storing of a momentary first counter reading, a momentary second counter reading and a bit rate value corresponding to a transmission bit rate specified for the respective virtual connection, and also by an adding means (RAH1, ADD1), which is connected to this read-write memory and is shared by all the counting means, it being possible to enter into the individual memory areas in each case on the one hand, in the course of setting up the assigned virtual connection, a specified initial counter reading as the first momentary counter reading and on the other hand, in the course of periodically repeated storing cycles, in each case a specified initial counter reading as t a momentary second counter reading, it being possible whenever message cells occur for the individual memory areas, determined on the basis of the cell header respectively contained in the said cells, to be included individually in a control cycle for the duration of transmission of the respective message cell, in the course of which control cycle initially the momentary first counter reading, momentary second counter reading and bit rate value stored in the respective memory area are supplied to the adding means (RAN1, ADD1), the circuit being designed such that in the course of the control cycle in progress at that time, on the one hand the momentary first counter reading is changed at least once by one counting unit and on the other hand the momentary second counter reading is changed at least once by the associated bit rate value by the adding means, that subsequently the resulting momentary first and second counter reading is entered into the respective memory area, overwriting the momentary first and second counter reading previously stored therein, that, if a maximum second counter reading specified for the respective virtual connection is exceeded by the momentary second counter reading made available at that time, a first status signal, indicating the exceeding of the transmission bit rate specified for the respective virtual connection, is made available by the adding means (RAN1, ADD1) and that the individual momentary first counter readings stored in the memory areas are respectively made available for an evaluation in the course of clearing down the assigned virtual connection.

2. Circuit arrangement according to Claim 1, characterized in that, in response to an activation of one of the counting means (ZSP1, RAN1, ADD1) taking place when a message cell occurs, its momentary first counter reading is changed by one counting unit after in each case a specified number of bits associated with the message cell occurring at that time.

3. Circuit arrangement according to Claim 1 or 2, characterized in that the counting means for registering the momentary first counter readings, comprising an individual memory area of the read-write memory (ZSP1) and the adding means (RAN1, ADD1), are designed as periodically cycling counting means and in that, every time a specified maximum first counter reading is exceeded by a momentary first counter reading determined at that time by the adding means, a second status signal is separately made available from the said adding means.

4. Circuit arrangement according to Claim 1, characterized in that, in the course of a control cycle activated when a message cell occurs, a momentary second counter reading initially stored in the relative memory area of the read-write memory (ZSP1) can be changed by the adding means (RAN1, ADD1) by the bit rate value stored in the respective memory area after in each case a specified number of bits associated with the message cell occurring at that time.

5. Circuit arrangement according to one of Claims 1 to 4, characterized in that a transmission bit rate which can be specified as a maximum is assigned a normalised bit rate value ("1"), in that, on the basis of this normalized bit rate value and a specified time interval between two successive memory cycles, a uniform maximum second counter reading is specified for all the virtual connections, and in that, in the case of a current transmission bit rate specified for the respective virtual connection which deviates from the transmission bit rate which can be specified as a maximum, the assigned bit rate value is a multiple of the normalised rate value corresponding to the ratio between the transmission bit rate which can be specified as the maximum and the current transmission bit rate.

6. Circuit arrangement according to one of Claims 1 to 4, characterized in that, for each of the virtual connections, the bit rate value and the maximum second counter reading are determined separately on the basis of the transmission bit rate specified for the respective virtual connection and the specified time interval between two successive memory cycles.

7. Circuit arrangement according to one of Claims 1 to 6, characterized in that associated with the adding means are an adder (ADD1) and a register arrangement (RAN1), connected downstream of the said adder and formed by two separate registers, in that, in the course of a control cycle, a momentary first counter reading stored in the memory area of the read-write memory relevant for the respective control cycle can be received in a first of the registers (Reg2), whereas the momentary second counter reading stored together with this momentary first counter reading can be received in a second of the registers (Reg4), from the read-write memory (ZSP1) via loading inputs, in that the momentary first counter reading and the momentary second counter reading can be supplied one after the other in a specified sequence from the respective register via a first controllable data selector (DW2) to first inputs of the adder (ADD1), in that the adder receives at second inputs, via a second data selector (DW1 controllable together with the first data selector, depending on the control of the data selectors, either with a numerical value corresponding to the counting unit specified for the changing of the respective momentary first counter reading or, from the read-write memory (ZSP1), a bit rate value stored together with the respective momentary secondary counter reading, in that a changed momentary first counter reading and momentary second counter reading, made available by the adder (ADD1), can be entered via data inputs into the respective register (Reg2 and Reg4), to be precise by overwriting the momentary first counter reading and momentary second counter reading previously entered therein, and in that, at the end of the respective control cycle, a momentary first counter reading and momentary second counter reading, entered in the respective register (Reg2 and Reg4) and possibly changed repeatedly beforehand in the course of the control cycle by repeated reception into the adder (ADD1) and subsequent entry into the respective register, can be entered via the first data selector (DW2) into the relevant memory area of the read-write memory (ZSP1).

## Revendications

1. Montage servant à déterminer la quantité de signaux de message envoyés, par l'intermédiaire de circuits (E1 à En) d'arrivée, à un central (BVA) de commutation à mode de transfert asynchrone, lors de la transmission de cellules de message suivant un procédé de transfert asynchrone au cours de liaison virtuelles passant par les circuits d'arrivée, et servant à contrôler pour les liaisons virtuelles individuelles que des débits binaires de transmission fixés sont respectés,
dans lequel il est associé à chacun des circuits (E1 à En) d'arrivée un nombre de dispositifs (ZSP1, RAN1, ADD1) de comptage correspondant au nombre des liaisons virtuelles y passant,
les dispositifs de comptage étant constitués chacun d'une zone de mémoire individuelle, qui est associée à une mémoire (ZSP1) d'écriture et de lecture et qui sert au moins à mémoriser un premier état de compteur provisoire, un deuxième état de compteur provisoire ainsi qu'une valeur de débit binaire correspondant au débit binaire de transmission fixé pour la liaison virtuelle associée, ainsi que d'un dispositif (RAN1, ADD1 d'addition commun à tous les dispositifs de comptage et relié à cette mémoire d'écriture et de lecture,
un état de compteur initial fixé pouvant, d'une part, au cours de l'établissement de la liaison virtuelle associée, être entré comme premier état de compteur provisoire dans les zones individuelles de mémoire et un état de compteur initial fixé pouvant, d'autre part, au cours de cycles de mémorisation effectués de manière périodiquement répétée, être entré comme deuxième état de compteur provisoire dans les zones individuelles de mémoire,
les zones individuelles de mémoire pouvant, lors de l'apparition de cellules de messages, suivant la donnée de l'en-tête de cellules qui y est contenu, être, pour la durée de transmission de la cellule de messages considérée, intégrées individuellement à un cycle de commande au cours duquel d'abord le premier état de compteur provisoire mémorisé dans la zone de mémoire associée, le deuxième état de compteur provisoire ainsi que la valeur de débit binaire sont envoyés au dispositif (RAN1, ADD1 d'addition,
le circuit étant réalisé de manière que, au cours du cycle de commande qui vient de se dérouler, d'une part le premier état de compteur provisoire soit modifié par le dispositif d'addition au moins une fois d'une unité de comptage et, d'autre part, le deuxième état de compteur provisoire soit modifié par le dispositif d'addition au moins une fois de la valeur de débit binaire associée,
que, ensuite, le premier et le deuxième états de compteur provisoires qui en résultent soient entrés dans la zone de mémoire associée en les écrivant à la place du premier et du deuxième états de compteur provisoires qui y sont mémorisés jusqu'ici,
que, dans le cas où le deuxième état de compteur provisoire qui vient d'être mis à disposition est supérieur à un deuxième état de compteur maximum fixé pour la liaison virtuelle associée, il soit mis à disposition par le dispositif (RAN1, ADD1 d'addition un premier signal d'avertissement indiquant le dépassement du débit binaire de transmission fixé pour la liaison virtuelle associée,
et que les premiers états de compteur individuels provisoires mémorisés dans les zones de mémoire soient, au cours de la suppression de la liaison virtuelle associée, mis à disposition pour une exploitation.

2. Montage suivant la revendication 1,
caractérisé en ce que,
à la suite d'une commande d'un des dispositifs (ZSP1, RAN1, ADD1 de comptage s'effectuant lors de l'apparition d'une cellule de messages, son premier état provisoire de comptage est modifié d'une unité de comptage après un nombre fixé de bits associés à la cellule de message qui vient d'apparaître.

3. Montage suivant la revendication 1 ou 2,
caractérisé en ce que
les dispositifs de comptage, constitués chacun d'une zone individuelle de la mémoire (ZSP1) d'écriture et de lecture et du dispositif (RAN1, ADD1) d'addition, sont, pour détecter les premiers états de compteur provisoires, réalisés sous forme de dispositif de comptage tournant périodiquement et en ce qu'il est mis à disposition séparément un deuxième signal d'avertissement par le dispositif d'addition, chaque fois qu'un premier état de compteur maximum fixé est dépassé par un premier état de compteur provisoire qui vient d'être déterminé.

4. Montage suivant la revendication 1,
caractérisé en ce que,
au cours d'un cycle de commande activé lors de l'apparition d'une cellule de messages, un deuxième état de compteur provisoire d'abord mémorisé dans la zone de mémoire associée de la mémoire (ZSP1) d'écriture et de lecture peut, après un nombre fixé de bits associés à la cellule de messages qui vient d'apparaître, être modifié par le dispositif (RAN1, ADD1 ) d'addition de la valeur de débit binaire mémorisée dans la zone de mémoire associée.

5. Montage suivant l'une des revendications 1 à 4,
caractérisé en ce que
il est associé à un débit binaire de transmission qui peut être fixé au maximum une valeur de débit binaire normée ("1"),
en ce qu'il est fixé, suivant la donnée de cette valeur de débit binaire normée et d'un intervalle de temps fixé entre deux cycles de mémorisation successifs, pour toutes les liaisons virtuelles, un deuxième état de compteur uniforme maximum,
et en ce que, pour un débit binaire de transmission instantané, fixé pour la liaison virtuelle associée, différant du débit binaire de transmission qui peut être fixé au maximum, la valeur de débit binaire est un multiple de la valeur de débit binaire normée correspondant au rapport du débit binaire de transmission pouvant être indiqué au maximum au débit binaire instantané.

6. Montage suivant l'une des revendications 1 à 4,
caractérisé en ce que
pour chacune des liaisons virtuelles, la valeur du débit binaire et le deuxième état de compteur maximum sont déterminés séparément, suivant la donnée du débit binaire de transmission fixé pour la liaison virtuelle associée et de l'intervalle de temps fixé entre deux cycles de mémorisation successifs.

7. Montage suivant l'une des revendications 1 à 6,
caractérisé en ce que
il est associé au dispositif d'addition un additionneur (ADD1) et un dispositif (RAN1) d'enregistrement monté en aval de l'additionneur et constitué de deux registres séparés,
en ce que, au cours d'un cycle de commande, il peut être reçu de la mémoire (ZSP1) d'écriture et de lecture, par l'intermédiaire d'entrées de lecture, dans un premier registre (Reg2), un premier état de compteur provisoire mémorisé dans la zone de la mémoire d'écriture et de lecture concernée pour le cycle de commande associé, dans un deuxième registre (Reg4), le deuxième état de compteur provisoire mémorisé conjointement avec ce premier état de compteur provisoire peut être reçu en revanche,
en ce que le premier état de compteur provisoire et le deuxième état de compteur provisoire peuvent être envoyés du registre associé, en une succession fixée, par l'intermédiaire d'un premier répartiteur (DW2) de données pouvant être commandé, à des premières entrées de l'additionneur (ADD1),
en ce que l'additionneur est alimenté à des deuxièmes entrées, par l'intermédiaire d'un deuxième répartiteur (DW1) de données pouvant être commandé conjointement avec le premier répartiteur de données, en fonction de la commande des répartiteurs de données, soit en une première valeur numérique correspondant à l'unité de comptage fixée pour la modification du premier état de compteur provisoire associé, soit, par la mémoire (ZSP1) d'écriture et de lecture, en une valeur de débit binaire mémorisée conjointement avec le deuxième état de compteur provisoire associé,
en ce qu'un premier état de compteur provisoire ou un deuxième état de compteur provisoire, modifié, mis à disposition par l'additionneur (ADD1), peut être entré dans le registre associé (Reg2 ou Reg4), et cela en l'écrivant à la place du premier état de compteur provisoire ou le deuxième état de compteur provisoire qui y a été entré jusqu'ici,
et en ce que, à la fin du cycle associé de commande, un premier état de compteur provisoire ou du deuxième état de compteur provisoire, entré dans le registre associé (Reg2 ou Reg4), modifié plusieurs fois auparavant éventuellement au cours du cycle de commande par une réception répétée dans l'additionneur (ADD1) et par l'entrée qui suit dans le registre associé, peut être entré par l'intermédiaire du premier répartiteur (DW2) de données dans la zone concernée de la mémoire (ZSP1) d'écriture et de lecture.
